Europäisches Patentamt

**European Patent Office**

**Office européen des brevets**

(11) Publication number: **0 497 334 A1**

# EUROPEAN PATENT APPLICATION

(21) Application number: **92101528.5**

(22) Date of filing: **30.01.92**

(51) Int. Cl.⁵: **B01D 67/00**, B01D 69/06, B01D 69/10

(30) Priority: **30.01.91 US 648006**

(43) Date of publication of application:
**05.08.92 Bulletin 92/32**

(84) Designated Contracting States:
**BE CH DE FR GB GR IT LI NL**

(71) Applicant: **E.I. DU PONT DE NEMOURS AND COMPANY**
**1007 Market Street**
**Wilmington Delaware 19898(US)**

(72) Inventor: **Campos, Daniel**
**2007 Greenbriar Drive**
**Wilmington, Delaware 19810(US)**
Inventor: **Eckman, Thomas John**
**920 Old Wilmington Road**
**Hockessin, Delaware 19707(US)**

(74) Representative: **Abitz, Walter, Dr.-Ing. et al**
**Abitz, Morf, Gritschneder, Freiherr von**
**Wittgenstein Postfach 86 01 09**
**W-8000 München 86(DE)**

(54) Fixed plate casting system.

⑤ Semi-permeable membranes are made by casting a solution of polymer onto a moving, porous substrate [10] while the substrate is moving over a rigid support [30]. The cast polymer layer [45] then is quenched by exposure to a gaseous atmosphere, and a liquid [80]. The resultant membranes have improved permeation properties and are especially suited for liquid separations by reverse osmosis.

FIG.1

## FIELD OF INVENTION

The present invention relates to semi-permeable membranes for fluid separations. In particular, the present invention relates to manufacture of asymmetric membranes for reverse osmosis.

## BACKGROUND OF INVENTION

Semipermeable membranes for fluid separations typically are composite membranes that are manufactured by casting a thick layer of polymeric solution onto a porous substrate and quenching one side of that polymer layer. Such methods are illustrated in U.S. patents 3,684,556 and 4,772,440, in Japanese patent publication (Kokai) 41042/1987 and U.S.4,529,646. U.S. 3,684,556 shows casting a polyurethane solution onto a fabric that is moving between rollers to form a polymer layer of at least 20 mils thickness.

U.S. 4,772,440 shows casting a solution of vinylidene fluoride of at least 12 mils thickness onto a fabric that slides on a fixed roll. The patent teaches that the cast solution then immediately is quenched in a fluorinated hydrocarbon medium for one to ten minutes.

U.S. 4,840,733 shows casting a polymer onto a dense, non-porous substrate such as a cast plate. The cast polymer on the dense substrate then is exposed to air and liquid coagulant.

Japanese patent publication (Kokai) 41042/1987 shows depositing a solution of polymer onto a belt as the belt moves over a planar support member to form a sheet on the belt. The Kokai quenches the deposited polymer by quenching only one side of the cast polymer with a liquid quench bath.

The methods of the prior art, although they result in useful membranes, are not capable of forming thin asymmetric membranes of sufficiently small pore size that are useful for reverse osmosis separations. The prior art also requires casting of thick layers of polymers which tend to produce membranes that have high variability in percent porosity and pore size distribution. A need therefore exists for method of providing thin semipermeable membranes that have improved permeation properties and which avoid the disadvantages of the prior art methods.

## SUMMARY OF INVENTION

The invention relates to production of semi-permeable membranes. The membranes are made by casting a solution of polymer onto a porous substrate while the substrate is moving over a rigid support member. The cast polymer is quenched by exposure to a gaseous atmosphere, and then by exposure to a liquid quench bath. The resultant membranes have improved permeation properties and are especially suited for liquid separations by reverse osmosis.

The invention entails casting a solution of polymer onto a moving, porous substrate while the substrate is supported on a rigid support member to provide a layer of polymer on the substrate. Thereafter, at least the front surface of the layer of polymer is exposed to a gaseous atmosphere. Both the front surface and the back surface of the polymer layer that contacts the substrate then are exposed to a liquid quench bath to coagulate the polymer layer into a thin semipermeable membrane. The resultant membrane has improved variability in properties such as percent porosity and pore size. The resultant membranes may be used to separate solutes from liquid mixtures such as seawater, waste water treatment, recovery of usable wastes from waste liquids from plating solutions and from paints, production of ultra pure water, as well as concentration of fruit juices and milk.

The method of the invention, although particularly suited for manufacture of semi-permeable asymmetric membranes, also may be used to manufacture support membranes for thin film composite membranes.

## BRIEF DESCRIPTION OF DRAWINGS

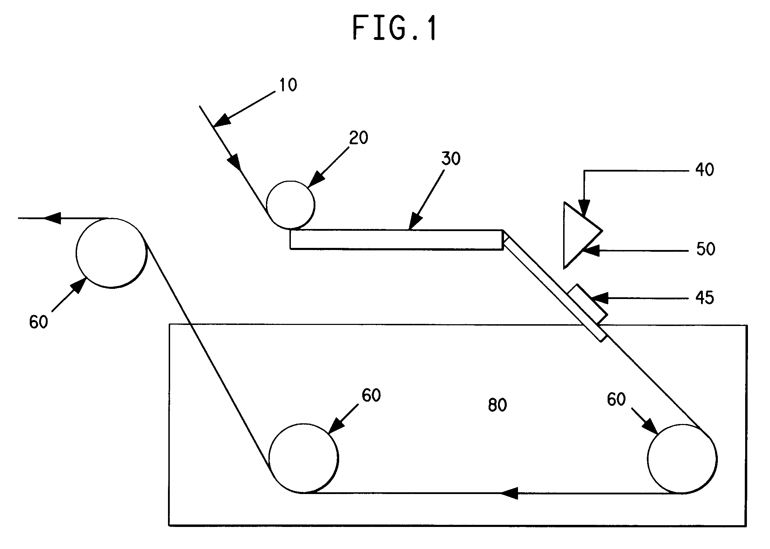

Fig. 1 is a schematic diagram of production apparatus to be used in the manufacture of the porous membrane of the present invention.

## DETAILED DESCRIPTION OF INVENTION

Having briefly summarized the invention, the invention will now be described in detail by reference to the following specification and non-limiting examples. Unless otherwise specified, all percentages are by weight and all temperatures are in degrees Celsius.

Generally, the method of the invention is accomplished by casting a solution of a polymer onto a moving substrate while the substrate is supported on a rigid, preferably planar support, member to form a thin layer of polymer of uniform thickness in the range of 12 to 65 micron, preferably 25 to 50 micron, most preferably 38 micron. Thereafter, the layer of polymer is exposed to a gaseous atmosphere, and then to a liquid quench bath to quench the polymer to form a semipermeable membrane. The semipermeable membrane then is exposed to a rinse bath solution.

By rigid, it is meant that the support member remains stationary as the substrate moves across its surface. The support member may be planar as shown in Figure 1 or may have some other geometry. For example, the typically rotating drum over which the substrate moves may be used if the rotation is stopped and the drum is held stationary as the substrate travels over its surface.

In the method of the invention, the polymer employed to form the cast polymer layer is dissolved in a solvent to prepare a polymer solution. The concentration of the polymer in the polymer solution may vary from 10 to 25 percent, preferably 15-20%, most preferably 16%. The viscosity of the polymer solutions that may be employed in the invention can vary over a wide range provided that the viscosity is not so low as to strike through the substrate, or so high that the viscosity does not flow past the doctor knife. Generally, these viscosities may vary from 200 to 800 centipoise, preferably 300 to 600 centipoise, most preferably 450 centipoise.

The method of the invention now will be explained in more detail by reference to Fig. 1. Fig. 1 is a schematic diagram of an apparatus for the manufacture of the semi-permeable membranes of the invention. As shown in Fig. 1, a porous substrate 10 in the configuration of a belt is supplied under tension beneath compression member 20 as substrate 10 passes over planar support member 30 but beneath doctor knife 50. Compression member 20 may be any suitable means to ensure uniform contact of the substrate material with support member 30. Support member 30 has a low coefficient of friction to ensure uniform movement of substrate 10 over support 30. Materials suitable for support 30 include glass, ceramic, aluminum, stainless steel, copper, nickel, alloys thereof, preferably stainless steel. The materials of the support member 30 also can bear low coefficient of friction, high hardness, non-stick coatings. Examples of suitable coatings include but are not limited to fluorocarbons such as tetrafluoroethylene (Teflon®), metal platings such as chrome, and the like, preferably Teflon.

As substrate 10 moves under doctor knife 50, polymer solution (not shown) is cast onto substrate 10 by doctor knife 50 to provide polymer layer 45 on substrate 10. Doctor knife 50 for applying polymer solution 40 to substrate 40 is fastened to support member 30 to retain a fixed relationship with support member 30. The surfaces of support 30 and doctor blade 50 should be straight enough to provide a uniform thickness of cast polymer. Preferably, support member 30 and doctor blade 50 have a tolerance for straightness of +/- 0.0002 inches.

The thickness of polymer layer 45 that is applied to substrate 10 can be controlled by varying the opening between the doctor knife 50 and support 30, as well as the velocity of substrate 10. Generally, the opening between doctor knife 50 and support 30, and the velocity of substrate 10 is sufficient to achieve a thickness of polymer layer 45 of 12 micron to 65 micron, preferably 25 to 50 micron, most preferably 38 micron.

After polymer layer 45 is deposited on substrate 10, substrate 10 bearing polymer layer 45 is exposed to a gaseous atmosphere prior to contacting quench bath 80. Polymer layer 45 on substrate 10 then is treated with liquid quench bath 80 while moving over support rolls 60 to a rinse bath (not shown) for removing residual liquid quench bath from polymer layer 45.

A wide variety of polymers which are insoluble in the liquid quench bath may be formed into polymer solutions for casting into semipermeable membranes by the invention. Suitable polymers include, but are not limited to, polyamides, polysulfones, polyethersulfones, polyimides, polyesters, polyethers, polyetherketones, cellulose acetates, and polyvinylidene fluorides, copolymers thereof, blends thereof and the like. Most preferably, the polymer is polysulfone.

Solvents that may be used to form the polymer solutions suitable for casting into polymer layers are typically aprotic and highly polar. The solvents are strong solvents for the polymer and miscible with the quench medium. Solvents that may be used in the invention include, but are not limited to, ethers, ketones, amide solvents, imide solvents, aromatic hydrocarbons, halogenated aromatic and aliphatic hydrocarbons, aromatic and aliphatic alcohols, acetic acids, esters, aromatic and aliphatic nitriles, and pyridine. Examples of suitable solvents include but are not limited to acetone, N-methyl-2-pyrrolidone, methanol, chloro-hyrdocarbons, phenols, chloro-phenols, dimethylformamide, dimethylacetamide, dimethylsulfoxide, preferably dimethylformamide.

The substrate materials suitable for use in the invention can be selected from a variety of compositions provided that the substrate has sufficient porosity to permit gases and liquids to penetrate through the substrate material to contact the cast polymer solution. Examples of suitable substrate materials include but are not limited to polyesters, polyolefins, polyamides, polyimides, polysulfones, polyacetates, and

EP 0 497 334 A1

copolymers thereof, preferably polyester.

As mentioned, the porous substrate bearing the cast polymer layer is exposed to a gaseous atmosphere prior to exposure to the liquid quench bath. For example, the substrate bearing the cast polymer can be exposed to the gaseous atmosphere while the substrate is in contact with the rigid support member to expose only the front surface of the polymer layer to the atmosphere. Preferably, the substrate bearing the cast polymer layer can be exposed to the atmosphere while separated from the support member. This results in exposing of both the front and back surfaces of the cast polymer layer to the atmosphere since the atmosphere can penetrate through the porous substrate.

Atmospheres for treating the polymer layer may be selected from a wide range of compositions, temperatures and pressures provided that the atmosphere is not soluble in the solvent of the cast polymer layer. Examples of suitable atmospheres for treating the cast polymer layer include but are not limited to ambient air, dry air, N, Ar, Xe, $CO_2$, and the like. Preferably, the atmosphere is ambient air.

subsequent to contacting of the front surface of the gaseous atmosphere, both the front and rear surfaces of the cast polymer layer are exposed to a liquid quench bath to coagulate the polymer to form a semi-permeable, asymmetric membrane. The quench bath liquid should be miscible with the polymer solvent and should be a non-solvent for the polymer. Examples of suitable quench bath liquids include but are not limited to water, and mixtures and solutions of water with polymer solvent where the amount of polymer solvent is insufficient to dissolve the polymer. Preferably, the liquid is water. When treatment of the cast polymer solution in the liquid quench bath is completed, the resulting, semi-permeable, asymmetric membrane is removed from the liquid quench bath and treated with a rinse solution to remove residual liquid quench bath and solvent. The rinse and the quench baths are typically the same composition. However, the quench bath usually is more concentrated in the solvent because most of the solvent is removed from the polymer solution in the quench bath. The rinse bath functions to remove the last traces of the solvent from the polymer. The rinse bath solvent therefore is completely miscible with the polymer solvent. Also the rinse bath has a sufficiently low amount of polymer solvent to allow mass transfer of the solvent from the polymer to the rinse medium. Examples of suitable rinse solvents include water or any liquid that is miscible with water.

The times of exposure of the cast polymer layer to the gaseous atmosphere and to the liquid quench bath is controlled to form a semipermeable membrane, preferably an asymmetric membrane, that has a dense front surface with increasing porosity from the front to the back surface of the cast polymer. Generally, the exposure time to the gaseous atmosphere may vary from 0.2 seconds to 10 seconds, preferably from 0.375 seconds to 3 seconds, most preferably 1.125 seconds. Likewise, the exposure time to the liquid quench bath may vary from 0.5 minutes to 30 minutes, preferably from 1 minutes to 5 minutes, most preferably 1 minutes.

The semi-permeable membranes that are yielded by the invention can be provided in a wide range of thicknesses, pore sizes and percent porosities. Generally, the thickness may be in the range of 12 to 65 microns, preferably 25 to 50 micron, most preferably 38 micron. Similarly, maximum pore sizes on the front surface of the membrane may be in the range of 3.6 to 7.0 nanometer, preferably 3.6 to 4.4 nanometer, and percent porosities may be in the range of 65 to 85%, preferably 70 to 75%, most preferably 73%. The percent porosity of the cast polymeric membrane is determined by cutting a disk of known diameter, such as 9.0 cm, from the wet, cast membrane. The disk is sooked in methanol for 30 minutes. The disk then is dried in ambient air for 30 minutes prior to drying at 80°C for one hour. The percent porosity of the disk of cast polymeric membrane is determined from the formula

$$\% \text{ Porosity} = \frac{\text{Density of Disk}}{\text{Density of polymer used to form the disk}} \times 100$$

The membranes produced by the invention show surprisingly improved uniformity in porosity and pore size distribution which provide improved permeation properties. This is evidenced by very low average and standard deviation of nitrogen leakage, as well as by the high pressures required to induce nitrogen leakage. Nitrogen leakage is determined by measuring the total volume of nitrogen at 25°C that is permeated through a 9 cm diameter disk of wet fabric substrate bearing the cast polymer layer when the side of the substrate bearing the polymer is subjected to nitrogen pressure that increases at a constant rate form 15 psi to 200 psi over 2 minutes. Throughout this procedure, the fabric side of the disk is facing upwardly and is in contact with water. The nitrogen leakage pressure is the pressure at which nitrogen

4

leakage through the membrane begins.

Without further elaboration, it is believed that one skilled in the art can, using the preceding description, utilize the present invention to its fullest extent. The following preferred specific embodiments are, therefore, to be construed as merely illustrative, and not limitative of the remainder of the disclosure in any way whatsoever. In the following examples, all temperatures are set forth in decrees Celsius; unless otherwise indicated, all parts and percentages are by weight.

REFERENCE EXAMPLE

In 84 parts by weight of dimethyl formamide 16 parts by weight of polysulfone is dissolved by stirring for ten hours. The resultant polymer solution is cooled to room temperature and subjected to a vacuum of 26 in of mercury for one hour. The polymer solution is applied by a doctor blade to a 127 micron polyester substrate fabric of an air Frazier permeability of six that is moving at the rate of 20 feet per minute over a rotating drum. The front side of the substrate bearing the polymer layer of 38 microns contacts an air gap of ambient atmosphere for a distance of 2 inches. Thereafter, the substrate bearing the polymer layer is passed through a liquid quench bath of water to quench the front side of the polymer layer. During this process, the back side of the substrate contacts a rotating drum for 30 inches from the point where it is coated. The polymer then is exposed to a rinse bath of water to remove residual dimethyl formamide. The resultant porous, asymmetric membrane has a thickness of 38 micron and a maximum pore size of 10 nanometers. The nitrogen leakage properties of the membrane are shown in Table 1.

EXAMPLE 1

The procedure of Reference Example is followed except that the coated substrate slides on a stainless steal plate rather than over a rotating drum. The substrate is kept in contact with the plate for a distance of 6.5 inches prior to passing through an air gap of 5.5 inches of ambient atmosphere to contact both sides of the cast polymer on the porous substrate. Thereafter, the substrate bearing the polymer layer is passed through a liquid quench bath of water to quench both sides of the polymer layer. The polymer then is exposed to a rinse bath of water to remove residual dimethyl formamide. The resultant porous, asymmetric membrane has a thickness of 38 micron and a maximum pore size of 4 nanometer. The nitrogen leakage properties of the membrane are shown in Table 1.

EXAMPLE 2

The procedure of Example 1 is followed except that the air gap is 9.0 inches. The resultant porous, asymmetric membrane has a thickness of 38 micron and a maximum pore size of 7 nanometer. The nitrogen leakage properties of the membrane are shown in Table 1.

EXAMPLE 3

The procedure of Example 1 is followed except that the coated substrate slides on the stainless steel plate for a distance of 1.5 inches and the air gap is 10.0 inches. The resultant porous, asymmetric membrane has a wall thickness of 38 micron and a maximum pore size of 4 nanometer. The nitrogen leakage properties of the membrane are shown in Table 1.

EXAMPLE 4

The procedure of Example 4 is followed except that the air gap is 4.5 inches. The resultant porous, asymmetric membrane has a wall thickness of 38 micron and a maximum pore size of 4 nanometer. The nitrogen leakage properties of the membrane are shown in Table 1.

EXAMPLE 5

The procedure of Example 3 is followed except that the air gap is 3.0 inches. The resultant porous, asymmetric membrane has a wall thickness of 38 micron and a maximum pore size of 4 nanometer. The nitrogen leakage properties of the membrane are shown in Table 1.

## TABLE 1

| EXAMPLE | NITROGEN LEAKAGE[1] | LEAKAGE PRESSURE[2] | STANDARD DEVIATION NITROGEN LEAKAGE | % REJ[3] | MAXIMUM[4] PORE SIZE |
|---|---|---|---|---|---|
| Reference | 67.0 ml | 44.0 psi | 75.0 ml | | 10 nm |
| 1 | 4.2 | 123.0 | 3.5 | 98.05 | 3.6 |
| 2 | 4.1 | 63 | 2.2 | 98.21 | 7.0 |
| 3 | 3.1 | 121.0 | 2.6 | 96.86 | 3.7 |
| 4 | 2.7 | 118.0 | 1.6 | 96.8 | 3.7 |
| 5 | 1.9 | 100.0 | 0.4 | | 4.4 |

[1] Total volume of nitrogen permeated through a 9.0 cm diameter disk of substrate bearing the polymer when the front side of the substrate bearing the cast polymer is subjected to a nitrogen pressure that increases at a constant rate from 15 psi to 200 psi over two minutes. The fabric side of the disk is in contact with water. The performance of the membrane in terms of salt rejection increases with decreased volume of nitrogen leakage.

[2] The pressure at which nitrogen leakage through the membrane begins. The performance of the membrane in terms of salt rejection increases as the pressure required to initiate nitrogen leakage increases.

[3] Salt rejection is obtained by making a composite membrane on the polysulfone membrane following the teachings of U.S. patents 4,529,646 and 4,520,044. % Salt rejection is measured by applying a feed solution of water and 0.2% by weight of sodium chloride at 225 PSIG and 25°C. The flowrate of the solution is adjusted so that the permeate is at atmospheric pressure and its flowrate is no more than 10% of that of the feed solution. The salt rejection is calculated as follows:

$$\% \text{ salt rejection} = 100\% \left(1 - \frac{\text{permeate salt concentration}}{\text{feed salt concentration}}\right)$$

[4] Maximum pore size is obtained by the correlation from Kesting, R.E., "Synthetic Polimeric Membranes," John Wiley & Sons, 2nd ed., 1985, p. 47.

From the foregoing description, one skilled in the art can easily ascertain the essential characteristics of this invention, and without departing from the spirit and scope thereof, can make various changes and modifications of the invention to adapt it to various usages and conditions.

## Claims

1. A method of manufacture of semipermeable membranes for liquid separations, comprising

casting a solution of polymer onto a moving, porous substrate while said substrate is supported on a rigid support member to provide a layer of said polymer on said substrate, said layer having a front surface distant from said substrate and a back surface in contact with said substrate,

exposing at least said front surface of said layer of polymer to a gaseous atmosphere, and

exposing both said front and said back surfaces of said polymer to a liquid quench bath to provide a semipermeable membrane.

2. The method of claim 1 wherein both said front and back surfaces of said layer of polymer are exposed to said atmosphere.

3. The method of claim 1 wherein said polymer is selected from the group of polyesters, polyolefins, polyamides, polyimides, polysulfones, polyacetates, copolymers thereof, and blends thereof.

4. The method of claim 1 wherein said substrate is a porous fabric selected from the group of polyesters, polyolefins, polyamides, polyimides, polysulfones, polyacetates, copolymers thereof, and blends thereof.

5. The method of claim 1 wherein said atmosphere is selected from the group of ambient air, dry air, AR, He, Xe, and $CO_2$.

6.  The method of claim 1 wherein said liquid quench bath is selected from the group of water, or mixtures of water and solvent for said polymer.

7.  The method of claim 1 wherein the thickness of said membrane is from about 12 to 65 microns.

8.  A method of separating solutes from a liquid mixture comprising passing said mixture through a semipermeable membrane wherein said membrane is manufactured by
    casting a solution of polymer onto a moving, porous substrate while said substrate is supported on a rigid support member to provide a layer of said polymer on said substrate, said layer having a front surface distant from said substrate and a back surface in contact with said substrate,
    exposing at least said front surface of said layer of polymer to a gaseous atmosphere, and
    exposing both said front and said back surfaces of said polymer to a liquid quench bath to coagulate said polymer to provide a semipermeable membrane.

9.  The method of claim 8 wherein said polymer is selected from the group of polyesters, polyolefins, polyamides, polyimides, polysulfones, polyacetates, copolymers thereof, and blends thereof.

10. The method of claim 8 wherein said liquid mixture is selected from the group of waste water, salt water, fruit juices, milk, and industrial wastes.

7

# FIG.1

EP 0 497 334 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 362 917 (STORK FRIESLAND B.V.) <br> * abstract; claims 1,2,4,10; figure 5 * <br> * column 1, line 36 - line 43 * <br> * column 6, line 42 - column 7, line 18 * | 1-10 | B01D67/00 <br> B01D69/06 <br> B01D69/10 |
| X | PATENT ABSTRACTS OF JAPAN <br> vol. 5, no. 132 (C-68)(804) 22 August 1981 <br> & JP-A-56 067 345 ( DAICEL K.K. ) 6 June 1981 <br> * abstract * | 1-10 | |
| D,X | PATENT ABSTRACTS OF JAPAN <br> vol. 7, no. 86 (C-161)(1231) 9 April 1983 <br> & JP-A-58 014 904 ( TORAY K.K. ) 28 January 1983 <br> & JP-B-62 041 042 <br> * abstract * | 1-10 | |
| D,Y | US-A-4 772 440 (KASI) <br> * abstract; figures; examples 6,7 * <br> * column 4, line 30 - line 36 * <br> * column 5, line 5 - line 14 * <br> * column 5, line 61 - column 6, line 26 * | 1-10 | TECHNICAL FIELDS SEARCHED (Int. Cl.5 ) |
| Y | EP-A-0 176 992 (E.I. DU PONT DE NEMOURS AND COMP ) <br> * abstract; claims 1,2,4; figure * <br> * page 5, line 5 - page 6, line 18 * | 1-10 | B01D |
| A | FR-A-2 391 837 (MILLIPORE CORP) <br> * claims 1-3,12; figure * <br> * page 6, line 1 - line 16 * <br> * page 12, line 39 - page 13, line 5 * <br> * page 22, line 5 - line 7 * <br> * page 26, line 19 - line 37 * <br> * page 29, line 5 - line 24 * | 1,3,5-10 | |

The present search report has been drawn up for all claims

| Place of search | Date of completion of the search | Examiner |
|---|---|---|
| THE HAGUE | 06 MAY 1992 | HOORNAERT P.G.R. |